# EUROPÄISCHE PATENTSCHRIFT

(11) **EP 3 814 996 B1**
(45) Veröffentlichungstag und Bekanntmachung des Hinweises auf die Patenterteilung: **20.04.2022**
(21) Anmeldenummer: 19786263.4
(22) Anmeldetag: 04.10.2019
(51) Int. Cl.: G06K 19/077, G06K 19/07, G06K 19/18, G06K 19/073

(54) **ELEKTRONISCHE MARKIERUNG**
ELECTRONIC MARKING
MARQUAGE ÉLECTRONIQUE

(30) Priorität: 04.10.2018 WO PCT/AT2018/060234
(43) Veröffentlichungstag der Anmeldung: 05.05.2021
(73) Patentinhaber: Riddle & Code GmbH, 1030 Wien (AT)
(72) Erfinder: FÜRSTNER, Thomas, 1102 Madliena, SWQ-1102 (MT)
(74) Vertreter: SONN Patentanwälte OG
(86) Internationale Anmeldenummer: PCT/AT2019/060327
(87) Internationale Veröffentlichungsnummer: WO 2020/069547

(56) Entgegenhaltungen:
- EP-A1- 3 040 913
- WO-A1-2005/006247
- WO-A1-2005/106782

## Beschreibung

Die Erfindung betrifft eine elektronische Markierung zur Bestätigung der Echtheit eines Gegenstands, umfassend: eine Antenne, eine analoge Empfangs- und Sendeschaltung, einen Mikrocontroller, und zumindest einen sicheren Kryptoprozessor, wobei die Antenne mit der analoge Empfangs- und Sendeschaltung verbunden ist, wobei der Mikrocontroller mit der analogen Empfangs- und Sendeschaltung und mit dem zumindest einen sicheren Kryptoprozessor verbunden ist, wobei der zumindest eine sichere Kryptoprozessor zur sicheren Erzeugung einer digitalen Signatur eingerichtet ist, wobei die elektronische Markierung eine oder mehrere elektrische Sensorleitungen (eine Anordnung von Sensorleitungen wird auch als "Sensormesh" bezeichnet) aufweist, und wobei der zumindest eine sichere Kryptoprozessor mit mindestens einer der Sensorleitungen verbunden und zur Ermittlung zumindest einer elektrischen Eigenschaft (einem "Fingerabdruck") der mindestens einen verbundenen Sensorleitung eingerichtet ist. Außerdem betrifft die Erfindung ein Verfahren zur Initialisierung und ein Verfahren zur Validierung einer solchen elektronischen Markierung.

Die Antenne kann beispielsweise eine Bluetooth- oder RFID-Antenne sein. Die Markierung kann auf ein Objekt, einen Gegenstand oder ein Produkt aufgebracht oder darin integriert sein, wobei die Authentizität und Integrität der Markierung die Echtheit des Objekts, Gegenstands oder Produkts bestätigt, wenn dieselbe elektronische Markierung nicht unbemerkt auf einen unechten Gegenstand übertragen werden kann. Zweck der gegenständlichen Erfindung ist es, eine Markierung mit größtmöglicher Sicherheit bereitzustellen. Die Sicherheit der Markierung hängt davon ab, ob die Markierung kopierbar oder auf einen anderen Gegenstand übertragbar ist, ohne bei der Übertragung ihre Integrität zu verletzen.

Um die Kopierbarkeit praktisch auszuschließen, umfasst die Markierung einen sicheren Kryptoprozessor, welcher zur sicheren Erzeugung einer digitalen Signatur eingerichtet ist. Derartige Kryptoprozessoren ("secure cryptoprocessors") sind bekannt. Es handelt sich im Wesentlichen um spezialisierte integrierte digitale Schaltkreise, die durch physikalische Sicherheitsmaßnahmen gegen einen unberechtigten Zugriff (lesend oder schreibend) von außen abgesichert sind ("tamper resistant"). Kryptoprozessoren werden beispielsweise in Smartcards oder Hardware-Sicherheitsmodulen verwendet, um das Auslesen eines darin hinterlegten privaten Schlüssels zu verhindern. Die erzeugte digitale Signatur kann über den mit dem Kryptoprozessor verbundenen Mikrocontroller und eine daran angeschlossene Antenne der Markierung übertragen und vom Empfänger somit drahtlos überprüft werden. Der Kryptoprozessor kann allerdings nicht verhindern, dass er von einem markierten Gegenstand abgetrennt und auf einem anderen (z.B. gefälschten) Gegenstand übertragen wird.

Bekannte elektronische Sicherungsmaßnahmen haben zum Ziel, den Zugang zu einem Schutzobjekt und die elektronische Kontaktierung des Schutzobjekts zu verhindern. In diese Kategorie fallen insbesondere die Sicherungsmaßnahmen von Kryptoprozessoren. Der Angreifer hat dabei von sich aus Interesse daran, die strukturelle Integrität des Schutzobjekts zu erhalten, weil er beispielsweise die im Kryptoprozessor hinterlegten Daten nicht auslesen könnte, wenn er diesen zerstören würde.

Die US 8 418 917 B1 zeigt Beispiele für derartige Sicherungsmaßnahmen zur Sicherung eines Lesegeräts für elektronische Markierungen. Die beschriebenen elektronischen Markierungen sind selbst jedoch nicht geschützt.

Die US 2015/097572 A1 zeigt eine elektronische Sicherungsmaßnahme zum Schutz eines Gehäuses. Eine drahtlos auslesbare Markierung (mit einer Antenne) ist darin jedoch nicht offenbart.

Technische Einzelheiten zu Sicherungsmaßnahmen für elektronische Schaltungen sind beispielsweise der Veröffentlichung "Design Principles for Tamper-Resistant Smartcard Processors" von Oliver Kömmerling und Markus G. Kuhn (USENIX Workshop on Smartcard Technology, Chicago, Illinois, USA, May 10-11, 1999) zu entnehmen.

Die WO 2005/006247 A1 zeigt eine Chipkarte mit einer Sensorleitung zur Feststellung einer Manipulation der Chipkarte.

Die Sensorleitung kann zugleich als Antenne verwendet werden.

Die EP 3 040 913 A1 zeigt einen RFID-Tag in einem Gehäuse, mit einer Maßnahme zur Detektion, wenn das Gehäuse geöffnet wird. Im Einzelnen ist eine Kapazität vorgesehen, die sich bei der Entfernung der Gehäuseteile naturgemäß ändert. Diese Änderung wird detektiert und in diesem Fall der RFID-Tag deaktiviert oder unbrauchbar gemacht.

In der WO 2005/106782 A1 ist ein RF-Tag gezeigt, der einen oder mehrere selbstzerstörende Schalter aufweist. Bei einem Ausführungsbeispiel ist die Anordnung dieser Schalter innerhalb einer Antennenspule gezeigt.

Es ist eine Aufgabe der Erfindung, eine Übertragung einer drahtlos überprüfbaren elektronischen Markierung von einem markierten Gegenstand, Objekt oder Produkt auf einen anderen Gegenstand, ein anderes Objekt oder ein anderes Produkt zu erschweren.

Die erfindungsgemäße elektronische Markierung der eingangs angeführten Art sieht vor, dass die eine oder mehreren elektrischen Sensorleitungen von der Antenne verschieden und zumindest teilweise mit der Antenne überlagert angeordnet sind. Eine überlagerte Anordnung bedeutet in diesem Zusammenhang, dass eine im Wesentlichen flache Anordnung der mindestens einen Sensorleitung geometrisch zumindest mit einer Leitung der Antenne oder mit einer von einer Leitung der Antenne eingeschlossenen Fläche überlagert ist (übereinander oder untereinander angeordnet) oder überlappt.

Ein möglicher Angriff auf eine solche Markierung ist, die Markierung auf einen gefälschten Gegenstand zu übertragen. Der Angreifer hat dabei Interesse daran, die Struktur der Markierung zu verändern, um die Markierung übertragen zu können. Die Erfindung macht sich die Erkenntnis zu Nutze, dass die Antenne bei gattungsgemäßen Markierungen relativ exponiert angeordnet sein muss und nur durch Kunststoff geschützt werden kann (um die drahtlose Kommunikation nicht zu behindern). Die Antenne stellt daher einen häufigen Angriffspunkt bei der Übertragung solcher Markierungen dar, weil sie relativ einfach abgetrennt und später wieder dieselbe oder eine neue, gleiche Antenne an die übertragenen Schaltungen angeschlossen werden kann. Die Innovation der gegenständlichen Markierung liegt darin, wie zusätzlich zu der durch den Kryptoprozessor gewährleisteten Kopiersicherheit die Übertragbarkeit der Markierung erschwert wird. Der Zugang des Angreifers zur Antenne und die elektronische Kontaktierung der Antenne sind dabei unkritisch.

Die elektrische Sensorleitung oder die elektrischen Sensorleitungen ist/sind über die Fläche der Antenne verteilt oder erstrecken sich über die Fläche. Sie sind vorzugsweise nicht mit der Antenne verbunden. Indem der Kryptoprozessor die Eigenschaft direkt ermittelt, kann verhindert werden, dass eine Messung am Original durchgeführt und ausgelesen und anschließend der Mikrocontroller durch einen Simulator ersetzt wird. Bei einer direkten Verbindung kann die Messung nicht beobachtet werden, ohne zu riskieren, das Messergebnis zu verfälschen, in welchem Fall sich der Kryptoprozessor entwerten, beispielsweise zurücksetzen könnte.

Der mit der erfindungsgemäßen Anordnung erzielte Schutz ist besonders effektiv, wenn die Antenne eine Spule ist, insbesondere eine gedruckte Spule, wobei die eine oder mehreren elektrischen Sensorleitungen zumindest teilweise in der Spulenfläche der Antenne angeordnet sind. Vorzugsweise erstreckt sich eine Anordnung der einen oder mehreren elektrischen Sensorleitungen über den gesamten Verlauf der Spule. In diesem Fall ist es nicht möglich, die Spule unbemerkt zu öffnen oder zu unterbrechen.

Vorzugsweise ist der zumindest eine sichere Kryptoprozessor zur Ermittlung zumindest des Widerstands, der Kapazität oder der Induktivität der zumindest einen Sensorleitung eingerichtet. Eine Widerstandsmessung kann jede Unterbrechung einer oder mehrerer Sensorleitungen aufdecken; eine Messung der Kapazität oder Induktivität kann auch bezüglich einer Änderung der Geometrie der Sensorleitungen empfindlich sein.

Es hat sich als besonders günstig herausgestellt, wenn die elektronische Markierung zumindest zwei Sensorleitungen aufweist, und der zumindest eine sichere Kryptoprozessor zur Ermittlung einer Kopplung zwischen zwei oder mehreren Sensorleitungen eingerichtet ist. Derartige Kopplungen hängen von vielen elektrischen Parametern ab (Leitungslänge, Abstand, Widerstand), sodass eine fehlerfreie Rekonstruktion einer einmal verletzten Anordnung der Sensorleitungen praktisch unmöglich ist. Alternativ oder Zusätzlich kann der zumindest eine sichere Kryptoprozessor auch zur Ermittlung einer Kopplung zwischen einer oder mehreren Sensorleitungen und der Antenne eingerichtet sein.

Um eine Trennung der Sensorleitungen von der restlichen Markierung zu vermeiden, ist es vorteilhaft, wenn die elektronische Markierung zumindest zwei Sensorleitungen aufweist, und die zumindest zwei Sensorleitungen in zumindest zwei Sensorschichten der elektronischen Markierung angeordnet sind. Ein perfektes Zusammenfügen einmal getrennter Sensorschichten wäre mit sehr großem Aufwand verbunden.

Wenn die Antenne in einer weiteren, von den zumindest zwei Sensorschichten verschiedenen Antennenschicht angeordnet ist, wobei vorzugsweise auf beiden Seiten der Antennenschicht jeweils zumindest eine Sensorschicht vorgesehen ist, ist die Antenne besonders gut geschützt und kann nicht unbemerkt ersetzt werden, d. h. ohne feststellbare Änderung der vom Kryptoprozessor ermittelten elektrischen Eigenschaften der Sensorleitungen.

Gemäß einer bevorzugten Ausführungsform ist der zumindest eine sichere Kryptoprozessor zur sicheren Erzeugung einer digitalen Signatur auf Basis eines im Kryptoprozessor gespeicherten digitalen Schlüssels eingerichtet. Alternativ oder zusätzlich kann der "Fingerabdruck" der Sensorleitungen als Basis für die eindeutige Identifikation und beispielsweise kryptografisches Seed für einen digitalen Schlüssel verwendet werden.

Um den Vorgang einer teilweisen Übertragung und Rekonstruktion der elektronischen Markierung weiter zu erschweren, kann vorgesehen sein, dass eine elektronische Schaltung zur permanenten Überwachung der einen oder mehreren elektrischen Sensorleitungen und zum Zerstören (z.B. Löschen) des digitalen Schlüssels im Fall einer Unterbrechung der elektrischen Versorgung oder im Fall einer Änderung der einen oder mehreren elektrischen Sensorleitungen eingerichtet ist.

Die Antenne kann vorzugsweise zur drahtlosen Stromversorgung der elektronischen Markierung (z.B. durch induktive Einkopplung), insbesondere des Mikrocontrollers eingerichtet ist. Darüber hinaus kann auch der zumindest eine sichere Kryptoprozessor auf dieselbe Art mit Strom versorgt werden, oder er kann über eine separate Stromversorgung versorgt werden.

Insbesondere im Zusammenhang mit einer permanenten Überwachung hat es sich als vorteilhaft herausgestellt, wenn die elektronische Markierung eine Stromversorgung in Form einer gedruckten Batterie aufweist, welche zur Stromversorgung zumindest des zumindest einen sicheren Kryptoprozessors eingerichtet ist.

Für die Anbringung der elektronischen Markierung auf dem zu schützenden Objekt, Gegenstand oder Produkt kann die elektronische Markierung eine Klebefläche zum Aufkleben der elektronischen Markierung auf ein zu markierendes Objekt (Wertgegenstand oder Produkt) aufweisen. Die Klebefläche kann insbesondere auf eine Seite eines - vorzugsweise flexiblen - Substrats mit der Antenne und den übrigen Bauteilen angeordnet sein.

Außerdem betrifft die Erfindung ein Verfahren zur Initialisierung einer elektronischen Markierung wie vorstehend beschrieben nach dem Aufbringen der elektronischen Markierung auf ein Objekt, umfassend die folgenden Schritte: Messen zumindest einer elektrischen Eigenschaften der einen oder mehreren elektrischen Sensorleitungen (des "Sensormeshs"); Speichern der gemessenen elektrischen Eigenschaft in einem geschützten Speicher der elektronischen Markierung; und Deaktivieren eines Schreibzugriffs auf den geschützten Speicher nach dem Speichern. Auf diese Weise wird eine sichere und überprüfbare Assoziation zwischen dem geschützten Speicher und der bzw. den Sensorleitung(en) hergestellt.

Schließlich betrifft die Erfindung auch ein Verfahren zur Validierung einer elektronischen Markierung wie vorstehend beschrieben, umfassend die folgenden Schritte: Messen zumindest einer elektrischen Eigenschaft der einen oder mehreren elektrischen Sensorleitungen (des "Sensormeshs"); Laden einer in einem geschützten Speicher gespeicherten elektrischen Eigenschaft; Vergleichen der zumindest einen gemessenen und der zumindest einen geladenen elektrischen Eigenschaft der einen oder mehreren elektrischen Sensorleitungen; und Entwerten der elektronischen Markierung, falls zwischen den verglichenen elektrischen Eigenschaften eine Abweichung außerhalb eines vorbestimmten Toleranzbereichs festgestellt wird. Das Entwerten der elektronischen Markierung kann beispielsweise ein Zerstören (z.B. Ändern oder Löschen) eines in dem Kryptoprozessor gespeicherten digitalen Schlüssels umfassen.

In diesem Zusammenhang ist es günstig, wenn während der Validierung ein zweiter digitaler Schlüssel einer elektronischen Schaltung zur permanenten Überwachung der einen oder mehreren elektrischen Sensorleitungen validiert wird, wobei die elektronische Markierung entwertet wird, wenn die Validierung des zweiten digitalen Schlüssels fehlschlägt. Wenn im Zuge der permanenten Überwachung der zweite digitale Schlüssel zerstört (z.B. gelöscht oder verändert) wird, wird bereits dadurch die elektronische Markierung entwertet.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 schematisch eine erste Ausführungsform einer elektronischen Markierung mit einem Kryptoprozessor und einer Sensorleitung;
Fig. 2 schematisch eine zweite Ausführungsform ähnlich der ersten Ausführungsform gemäß Fig. 1 mit einer zusätzlichen zweiten Sensorleitung;
Fig. 3 schematisch einen Schichtaufbau der zweiten Ausführungsform gemäß Fig. 2 entlang der Schnittlinie III-III in Fig. 2 mit einem Substrat, zwei Sensorschichten und dazwischen einer Antennenschicht;
Fig. 4 schematisch eine dritte Ausführungsform mit einem über die Antenne autonom mit Strom versorgten Kryptoprozessor;
Fig. 5 schematisch eine vierte Ausführungsform mit einer gedruckten Batterie zur Stromversorgung des Kryptoprozessors;
Fig. 6 vereinfacht die wesentlichen Schritte eines Initialisierungsverfahrens für eine gegenständliche elektronische Markierung;
Fig. 7 vereinfacht die wesentlichen Schritte eines Validierungsverfahrens für eine gegenständliche elektronische Markierung; und
Fig. 8 schematisch eine fünfte Ausführungsform mit einer Vielzahl von über Logikgatter verbundenen Sensorleitungen.

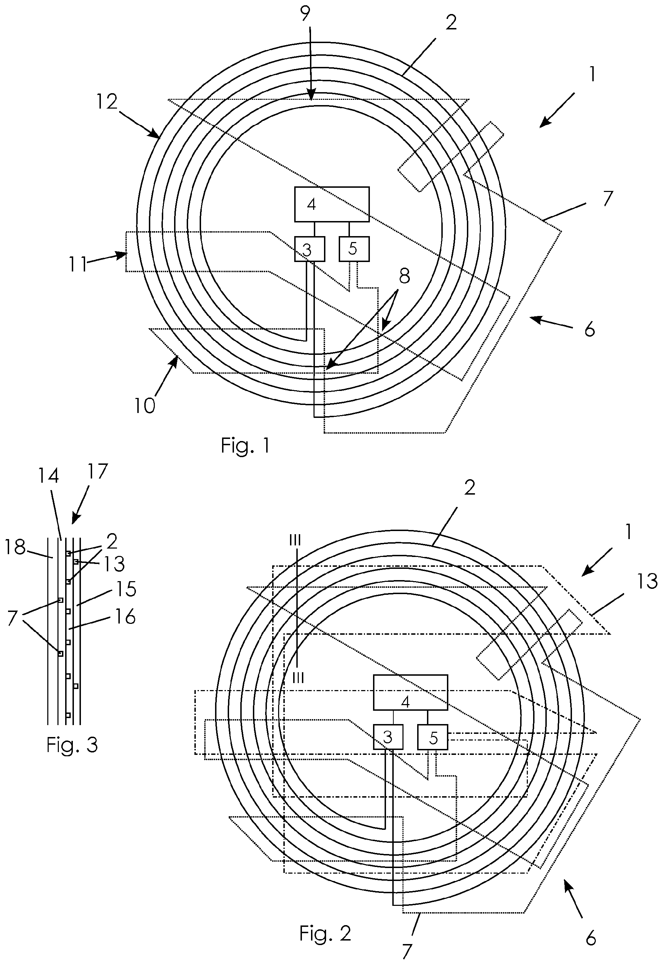

Fig. 1 zeigt eine erste Ausführungsform einer elektronischen Markierung 1. Die elektronische Markierung 1 weist eine Antenne 2, eine analoge Empfangs- und Sendeschaltung 3 (Transceiver) sowie einen Mikrocontroller 4 (allgemein einen digitalen Schaltkreis) auf. Diese Komponenten sind von herkömmlichen RFID-Transpondern (RFID von englisch "radio-frequency identification") an sich bekannt und dem Fachmann geläufig. Die Antenne 2 weist in der Art einer RFID-Antenne sechs Windungen auf, die spiralförmig angeordnet sind. Selbstverständlich sind aber auch andere Anordnungen der Antenne 2 möglich, beispielsweise im Wesentlichen dreieckig, quadratisch oder rechteckig. Die Antenne 2 kann beispielsweise durch Drucken hergestellt sein. Die Antenne 2 bildet eine Spule und ermöglicht die Erzeugung einer Wechselspannung in der damit verbundenen analogen Empfangs- und Sendeschaltung 3 durch Anlegen eines magnetischen Wechselfelds und die resultierende Induktion. Diese Wechselspannung kann zur Stromversorgung sowohl der Empfangs- und Sendeschaltung 3 als auch des Mikrocontrollers 4 verwendet werden, sodass deren Betrieb nicht zwingend auf eine eigenständige Energieversorgung angewiesen ist. Solche Markierungen werden "passiv" bezeichnet, weil sie ohne Energiezufuhr nicht betrieben werden können. Im Unterschied zu einem herkömmlichen RFID-Transponder dient die vorliegende Markierung nicht nur der Identifikation, sondern auch der Authentisierung und dem Nachweis der Integrität der Markierung und - bei entsprechender Befestigung auf einem markierten Objekt - der Echtheit des markierten Objekts.

Zu diesem Zweck weist die elektronische Markierung 1 zusätzlich einen sicheren Kryptoprozessor 5 und ein so genanntes "Sensormesh" 6 auf. Der sichere Kryptoprozessor 5 ist zur sicheren Erzeugung einer digitalen Signatur unter Verwendung eines darin gesichert (nicht auflesbar) hinterlegten ersten digitalen Schlüssels eingerichtet. Das Sensormesh 6 umfasst im vorliegenden ersten Ausführungsbeispiel eine erste Sensorleitung 7. Zur Unterscheidung der verschiedenen Leitungen ist die Antenne 2 als durchgezogene Linie und die erste Sensorleitung 7 als punktierte Linie dargestellt. Die Sensorleitung 7 weist entlang ihres Verlaufs mehrere Kreuzungspunkte 8 auf. An diesen Kreuzungspunkten 8 sind die sich kreuzenden Leitungsabschnitte elektrisch isoliert, sodass die Sensorleitung 7 dadurch nicht kurzgeschlossen ist. Die Kreuzungspunkten 8 weist die Sensorleitung 7 mehrere eingeschlossene Spulenflächen 9, 10, 11 mit jeweils unterschiedlichem Drehsinn auf. Die Spulenflächen 9-11 überlappen teilweise mit der Spulenfläche 12 der Antenne 2; das Sensormesh 6 (d.h. die eine oder mehreren elektrischen Sensorleitungen) ist (bzw. sind) somit teilweise in der Spulenfläche 12 der Antenne 2 angeordnet.

Die Sensorleitung 7 ist mit dem Kryptoprozessor 5 verbunden und von der Antenne 2 verschieden und überlagert sowohl die Antenne 2, als auch die Empfangs- und Sendeschaltung 3 sowie den Mikrocontroller 4. Eine Trennung der Antenne 2 von den Schaltungen 3, 4 würde daher eine Unterbrechung der Sensorleitung 7 erfordern. Der Verlauf und/oder die Länge der Sensorleitung 7 können bei der Herstellung der Markierung 1 zufällig festgelegt werden, sodass die elektrischen Eigenschaften des Sensormeshs 6 (d.h. der einen oder mehreren elektrischen Sensorleitungen) für jede Markierung 1 individuell sind. Der Kryptoprozessor 5 kann zumindest eine elektrische Eigenschaft der Sensorleitung 7 ermitteln, beispielsweise den elektrischen Widerstand und/oder die Induktivität. Optional kann der Kryptoprozessor 5 Informationen über ein äußeres magnetisches Wechselfeld, die beispielsweise von der Empfangs- und Sendeschaltung 3 bereitgestellt werden können, verwenden, und mit dem zeitlichen Verlauf der in der Sensorleitung 7 induzierten Wechselspannung vergleichen. Auf diese Weise kann eine induzierte Wechselspannung als indirekte Messgröße für die elektrischen Eigenschaften des Sensormeshs 6 verwendet werden. Die so gewonnenen Informationen können anschließend mit vom Kryptoprozessor 5 gespeicherten Referenzgrößen verglichen werden, um bei einer hinreichenden Übereinstimmung die Integrität des Sensormeshs 6 festzustellen und ein entsprechendes Integritätssignal an den mit dem Kryptoprozessor 5 verbundenen Mikrocontroller 4 zu übermitteln. Dieses Integritätssignal kann mit einer Signatur eines im Kryptoprozessor 5 hinterlegten privaten digitalen Schlüssels gesichert sein, um die Authentizität der Integritätsinformation überprüfbar zu machen. Der Mikrocontroller 4 kann in weiterer Folge das signierte Integritätssignal über die Empfangs- und Sendeschaltung 3 und die Antenne 2 an einen externen Empfänger (nicht gezeigt) übermitteln, welcher zur Überprüfung der elektronischen Markierung 1 eingerichtet ist. Das Integritätssignal kann optional die ermittelten elektrischen Eigenschaften des Sensormeshs 6 enthalten und somit zusätzlich zur Authentifikation der Markierung 1 verwendet werden.

Wie die Antenne 2 kann auch die Sensorleitung 7 beispielsweise durch Drucken hergestellt sein. Dabei wird die Sensorleitung 7 in einer eigens vorgesehenen, über der Antenne 2 isolierten Schicht gedruckt und anschließend eingebettet, um unwillkürliche Beschädigungen der Sensorleitung 7 zu vermeiden. Dabei kann die Antenne 2 zwischen einem - mechanisch relativ robusten - Substrat und der Schicht mit der Sensorleitung 7 angeordnet sein. Auf diese Weise wird erreicht, dass eine Manipulation der Antenne 2 eine Veränderung der Sensorleitung 7 verursacht und somit gewährleistet, dass die Integrität der Markierung 1 nicht unbemerkt verletzt werden kann.

Die in den Figuren 2 und 3 gezeigte zweite Ausführungsform entspricht einer elektronischen Markierung 1 mit einer gegenüber der ersten Ausführungsform gesteigerten mechanischen Empfindlichkeit. Für die im Zusammenhang mit der ersten Ausführungsform beschriebenen gemeinsamen Komponenten werden dieselben Bezugszeichen verwendet und es wird zur Vermeidung von Wiederholungen auf die obigen Ausführungen verwiesen. Zusätzlich zu diesen gemeinsamen Komponenten weist das Sensormesh 6 der elektronischen Markierung 1 gemäß Fig. 2 eine zweite Sensorleitung 13 auf (schematisch als strichpunktierte Linie dargestellt). Beide Sensorleitungen 7, 13 des Sensormeshs 6 sind mit dem Kryptoprozessor 5 verbunden. Die obigen Ausführungen betreffend die Kreuzungspunkte 8 und die Spulenflächen 9-11 der ersten Sensorleitung 7 treffen analog auch auf die zweite Sensorleitung 13 zu. Der Kryptoprozessor 5 ist in diesem Beispiel zu Ermittlung einer Kopplung zwischen den beiden Sensorleitungen 7, 13 eingerichtet. Dazu kann er beispielsweise an einer ersten Sensorleitung 7 eine Wechselspannung anlegen und eine an der zweiten Sensorleitung 13 induzierte Wechselspannung messen.

Zur Steigerung der Empfindlichkeit gegenüber Verletzungen der mechanischen Integrität der Markierung 1 sind die Sensorleitungen 7, 13 in unterschiedlichen Sensorschichten 14, 15 angeordnet und eingebettet. Die Antenne 2 ist in einer weiteren Schicht, nämlich in einer von den Sensorschichten 14, 15 verschiedenen Antennenschicht 16 vorgesehen. Der Schichtenverbund 17 aus den beiden Sensorschichten 14, 15 und der Antennenschicht 16 ist auf einem Substrat 18 angeordnet. Das Substrat 18 ist dabei so gewählt, dass bei der bestimmungsgemäßen Verwendung der Markierung 1 eine für die Bestätigung der Integrität ausreichende Reproduzierbarkeit der Anordnung der Sensorleitungen 7, 13 erzielt wird. Auf einer dem Schichtenverbund 17 gegenüberliegenden Seite des Substrats 18 kann optional eine Klebefläche z.B. in Form einer Doppelklebefolie angebracht sein, mit der die elektronische Markierung 1 auf ein zu markierendes Objekt aufgeklebt werden kann.

Die Antennenschicht 16 ist zwischen den beiden Sensorschichten 14, 15 angeordnet. Dadurch ist ein Zugang zur Antennenschicht 16 und der darin angeordneten Antenne 2 nur nach vorheriger mechanischer Manipulation zumindest einer der beiden Sensorschichten 14, 15 möglich. Jedenfalls wenn dabei eine Sensorleitung 7, 13 beschädigt oder unterbrochen wird, oder die geometrische Anordnung einer der beiden Sensorleitungen 7, 16 geändert wird, kann eine solche Manipulation anhand einer Änderung der elektrischen Eigenschaften der entsprechenden Sensorleitungen 7, 13 ermittelt und signalisiert werden. Darüber hinaus kann abhängig vom verwendeten Schichtmaterial der betreffenden Sensorschicht eine Manipulation auch bereits bei einer Änderung der Materialzusammensetzung oder Materialmenge des Schichtmaterials anhand einer Änderung einer elektrischen Eigenschaft detektiert werden, beispielsweise der Induktivität, der Kapazität.

Ganz allgemein sind im Rahmen der vorliegenden Offenbarung mit den elektrischen Eigenschaften der Induktivität und der Kapazität nicht nur einzelne Messwerte gemeint, sondern auch frequenzabhängige und/oder zeitabhängige Verläufe oder Funktionen; d. h. die auf die Frequenz eines äußeren Wechselfeldes und/oder auf die Frequenz eines Gebrauch vor der Messung angeregten Wechselfelds abstellen und beispielsweise die Abhängigkeit des jeweiligen Messwerts von der betreffenden Frequenz darstellen oder allgemein berücksichtigen.

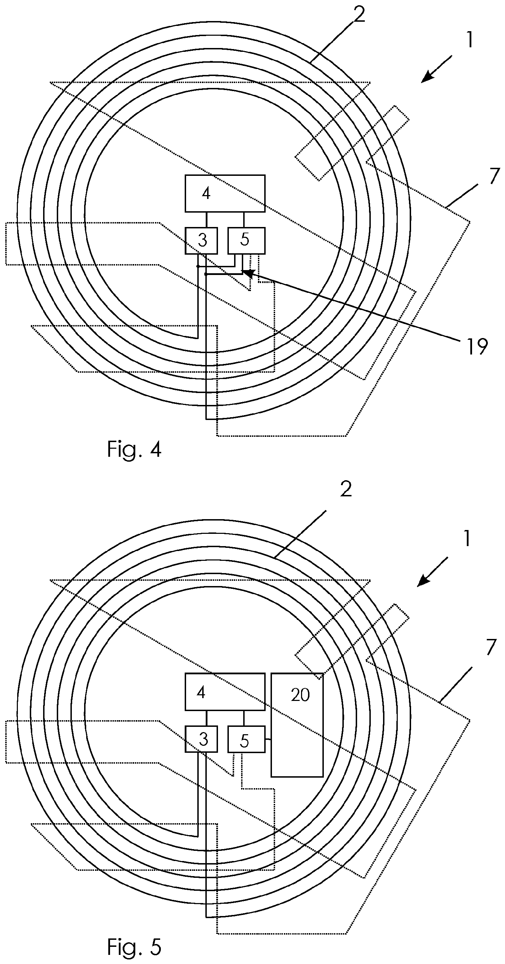

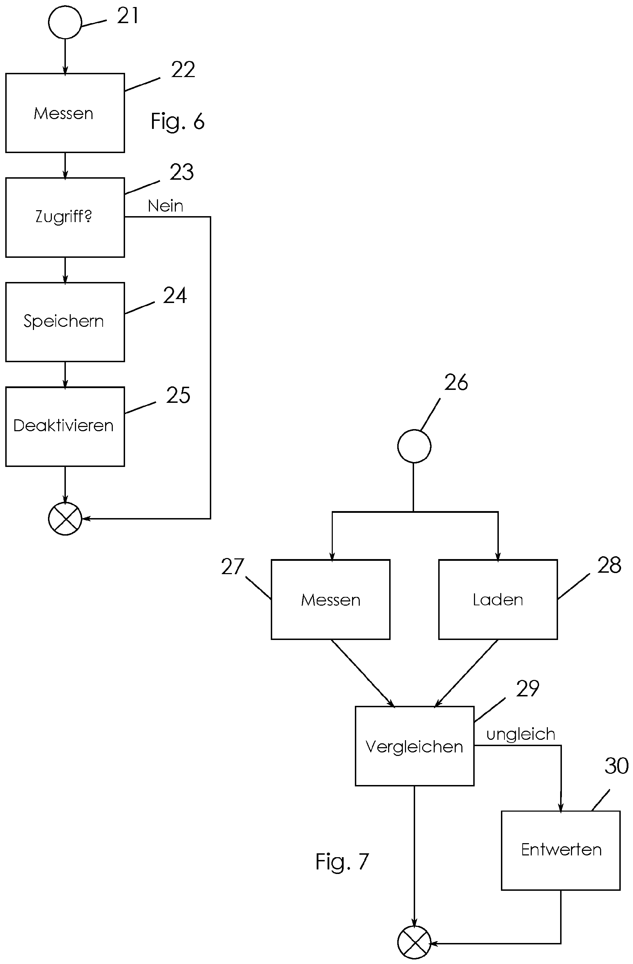

Die in Fig. 4 gezeigte dritte Ausführungsform unterscheidet sich von der ersten Ausführungsform gemäß Fig. 1 durch die direkte Verbindung 19 des Kryptoprozessors 5 mit der Antenne 2. Über diese direkte Verbindung kann der Kryptoprozessor 5 aus einer in der Antenne 2 induzierten Spannung mit Energie versorgt werden. Im Einzelnen unterscheidet sich die direkte Versorgung des Kryptoprozessors 5 von der allgemeinen Versorgung über die Empfangs- und Sendeschaltung 3 gemäß der ersten Ausführungsform dadurch, dass der Kryptoprozessor 5 für eine geringere Energieaufnahme ausgelegt ist, wie sich aus der unterschiedlichen Verwendung der auf diese Weise aufgenommene Energie ergibt: solange die in der Antenne 2 induzierte Spannung nicht zur Versorgung der vollen Funktionalität der Markierung 1 ausreicht, beschränkt der Kryptoprozessor 5 seine Aktivität auf einen Überwachungsbetrieb (im Unterschied zu einem Initialisierungsbetrieb oder Validierungsbetrieb, die weiter unten im Zusammenhang mit den Figuren 6 und 7 beschrieben werden). In diesem Überwachungsbetrieb bleiben die Empfangs- und Sendeschaltung 3 sowie der Mikrocontroller 4 inaktiv. Der Kryptoprozessor 5 nimmt im Überwachungsbetrieb in zeitlichen Abständen eine Kontrollmessung an der Sensorleitung 7 vor. Die zeitlichen Abstände können dabei so gewählt sein, dass eine vorübergehende Trennung der Antenne 2 und/oder der Sensorleitung 7 vom Kryptoprozessor 5 bemerkt würde. Wenn der Kryptoprozessor 5 eine solche Trennung (z.B. wegen einer Manipulation) detektiert, löscht er selbstständig den für die Erzeugung einer authentischen Signatur erforderlichen digitalen Schlüssel aus seinem geschützten Speicher und entwertet dadurch die Markierung 1.

Da bei einer Trennung von der Antenne 2 die Stromversorgung des Kryptoprozessor 5 ausfällt, kann der Kryptoprozessor 5 einen autonom versorgten Zeitsignalgeber umfassen, welcher nach Ablauf einer vorgegebenen Zeitspanne ohne externe Energieversorgung, die unter anderem den Energiespeicher des Zeitsignalgebers aufladen könnte, eine Entwertung der Markierung 1 auslöst. In diesem Zusammenhang kann für den Überwachungsbetrieb ein zweiter digitaler Schlüssel im Kryptoprozessor 5 gespeichert sein, der bei der Detektion einer Manipulation im Überwachungsbetrieb zerstört wird. Im Zuge einer späteren Validierung der Markierung 1 kann der Kryptoprozessor 5 eine Validierung des zweiten digitalen Schlüssels vornehmen, welche naturgemäß fehlschlagen wird, wenn der zweite digitale Schlüssel zerstört wurde. Diese Alternative ermöglicht eine Unterscheidung zwischen der aktuell festgestellten Integrität auf Basis der momentanen elektrischen Eigenschaften des Sensormeshs 6 einerseits, welche durch den Nachweis des ersten digitalen Schlüssels bestätigt wird, von der im Überwachungsbetrieb überwachten kontinuierlichen Integrität andererseits, welche durch den Nachweis des zweiten digitalen Schlüssels bestätigt wird. So kann nach einer längeren Aufbewahrung der Markierung 1 abseits jeglicher elektromagnetischer Felder (z.B. in einem abgeschirmten Safe) zumindest noch die momentane Integrität der Markierung 1 bestätigt werden, wenn zwar der zweite digitale Schlüssel, nicht aber der erste digitale Schlüssel zerstört wurde.

Die in Fig. 5 gezeigte vierte Ausführungsform hat hinsichtlich der Überwachung durch den Kryptoprozessor 5 im Überwachungsmodus im Wesentlichen dieselbe Funktionalität wie die oben beschriebene dritte Ausführungsform. Im Unterschied zur dritten Ausführungsform wird die Energieversorgung des Kryptoprozessors 5 im Überwachungsmodus allerdings nicht über die Entnahme von Energie aus einem externen magnetischen Wechselfeld, sondern von einer Batterie 20, genau einer gedruckten Batterie, bereitgestellt. In Abwesenheit eines für die Energieversorgung und den Betrieb der gesamten Markierung 1 erforderlichen magnetischen Wechselfelds wird nur der Kryptoprozessor 5 von der Batterie 20, mit der er direkt verbunden ist, mit für den Überwachungsbetrieb ausreichender Energie versorgt. Hinsichtlich des Betriebs des Kryptoprozessors 5 im Überwachungsmodus (kurz Überwachungsbetrieb) wird zur Vermeidung von Wiederholungen auf die obigen Ausführungen zu Fig. 4 verwiesen, die hier analog anwendbar sind. Sobald aus der Antenne 2 ausreichend Energie für den Betrieb der gesamten Markierung 1, einschließlich Empfangs- und Sendeschaltung 3 und Mikrocontroller 4 gewonnen werden kann, wird die Batterie 20 wieder aufgeladen.

Fig. 6 illustriert ein Verfahren zur Initialisierung einer elektronischen Markierung 1 gemäß den hier beschriebenen Ausführungsbeispielen. Als Auslöser 21 des Verfahrens kann beispielsweise das Anliegen eines magnetischen Wechselfelds an der elektronischen Markierung 1 sowie die Übermittlung eines Initialisierungsbefehls an die elektronische Markierung 1 dienen. Der Mikrocontroller 4 und/oder der Kryptoprozessor 5 ist/sind zum Empfang eines solchen Initialisierungsbefehls eingerichtet. Bei der Initialisierung wird insbesondere ein geschützter Speicher des Kryptoprozessors 5 initialisiert. In einem ersten Schritt 22 misst der Kryptoprozessor 5 eine oder mehrere elektrische Eigenschaften des Sensormeshs 6. Welche elektrischen Eigenschaften dafür infrage kommen, wurde oben im Zusammenhang mit den verschiedenen Formen des Sensormeshs 6 bereits ausführlicher erläutert. Anschließend wird in einem zweiten Schritt 23 geprüft, ob der geschützte Speicher des Kryptoprozessors 5 beschreibbar ist und somit ein Zugriff (genauer: Schreibzugriff) für die Initialisierung möglich ist. Wenn kein Zugriff möglich ist, wird die Initialisierung abgebrochen. Wenn ein Zugriff möglich ist, wird das Ergebnis der Messung oder Messungen der elektrischen Eigenschaften des Sensormeshs 6 oder aus diesen Ergebnissen abgeleitete Parameter im geschützten Speicher des Kryptoprozessors 5 als Referenzgröße(n) hinterlegt (dritter Schritt 24). Danach wird im vierten Schritt 25 der Schreibzugriff des geschützten Speichers deaktiviert und der geschützte Speicher somit elektronisch versiegelt.

Durch das Initialisierungsverfahren wird die elektronische Markierung von einem ungeschützten Zustand, in dem die Integrität der elektronischen Markierung 1 nicht überprüft und somit weder überwacht noch nachgewiesen werden kann, in einen geschützten Zustand, in dem die elektronische Markierung einsatzbereit für eine Validierung ist, überführt. Das Initialisierungsverfahren, d. h. die Initialisierung, kann vom Hersteller der elektronischen Markierung 1 in einer geschützten Umgebung durchgeführt werden, um eine spätere Manipulation am Sensormesh 6 ausschließen zu können. Alternativ kann die Initialisierung auch erst nach Anbringung der elektronischen Markierung 1 auf einem zu schützenden Objekt durchgeführt werden. Dies hat den Vorteil, dass für die Integritätsprüfung auch elektrische Eigenschaften verwendet werden können, sich bei einer Verformung der elektronischen Markierung 1 ändern können und die elektronische Markierung 1 somit nicht nur gegen Verletzungen der eigenen Integrität, sondern auch gegen Veränderungen der eigenen Form schützen kann und solche Veränderungen überwachen und anzeigen kann. Beispielsweise kann eine über eine Kante geknickte elektronische Markierung 1 ein anderes Verhalten somit andere elektrische Eigenschaften hinsichtlich der induktiven Kopplung zwischen der Antenne 2 und dem Sensormesh 6 (z.B. mit den Sensorleitungen 7, 13) aufweisen als in einem flachen Zustand. In diesem Fall kann eine Veränderung des Knickwinkels oder eine veränderte Position der Knickkante relativ zur elektronischen Markierung 1 vom Kryptoprozessor 5 detektiert und als Manipulation erkannt werden. Weiters kann eine Sensorleitung in der Art wie bei einem Dehnmessstreifen ausgeführt sein (mit einem dehnbaren Substrat und einer entsprechenden Antenne) und die elektronische Markierung bei der Aufbringung auf ein Objekt in einem zufälligen Ausmaß gedehnt und anschließend initialisiert werden. Das Ausmaß dieser Dehnung ist dann anhand des elektrischen Widerstands der Sensorleitung messbar und eine unbemerkte Übertragung der Markierung würde eine exakte Reproduktion der Dehnung bei der Verbindung mit einem gefälschten Objekt unter Berücksichtigung eines möglicherweise unterschiedlichen Dehn- oder Kompressionsverhaltens des neu markierten Objekts im Vergleich zum ursprünglich markierten Objekt erfordern. Im Zusammenhang mit diesen Sicherungsmaßnahmen kann im Allgemeinen auch auf eine Überlagerung das Sensormeshs mit der Antenne verzichtet werden.

Fig. 7 illustriert beispielhaft ein Verfahren zur Bestätigung der Authentizität und Integrität (auch kurz "Validierung") einer elektronischen Markierung 1 gemäß einem der hier gezeigten Ausführungsbeispiele. Als Auslöser 26 kann das Anliegen eines magnetischen Wechselfelds und die Übermittlung eines Validierungsbefehls dienen. Infolgedessen wird in einem ersten Schritt 27 eine für die Validierung ausschlaggebende elektrische Eigenschaft des Sensormeshs 6 gemessen und parallel in einem zweiten Schritt 28 eine im geschützten Speicher des Kryptoprozessors 5 bei der Initialisierung hinterlegte Referenzgröße (z.B. früher gemessene elektrische Eigenschaft) geladen. Anschließend führt der Kryptoprozessor 5 in einem Vergleichsschritt 29 ein Vergleich der gemessenen elektrischen Eigenschaft mit der geladenen Referenzgröße durch. Alternativ kann selbst verständlich eine aus der oder den elektrischen Eigenschaften abgeleitete Größe verglichen werden. Falls eine Abweichung zwischen den verglichenen Werten festgestellt wird, die beispielsweise einen vorbestimmten Schwellenwert überschreitet, wird in einem vierten Schritt 23 die elektronische Markierung 1 entwertet. Dabei wird ein im Kryptoprozessor 5 hinterlegte erste digitale Schlüssel zerstört (geändert oder gelöscht), sodass die Erzeugung eines mit diesem digitalen Schlüssel kryptografisch signierten Integritätssignals in Zukunft unmöglich ist. Falls beim Vergleich 29 eine ausreichende Übereinstimmung festgestellt wird, erzeugt der Kryptoprozessor 5 ein Integritätssignal, signiert das Integritätssignal mit dem ersten digitalen Schlüssel und gibt das signierte Integritätssignal an den Mikrocontroller 4 weiter. Der Mikrocontroller 4 sendet das signierte Integritätssignal über die Empfangs- und Sendeschaltung 3 an einen die Validierung auslösenden Empfänger, z.B. ein Smartphone. Durch die direkte Anbindung des Kryptoprozessors 5 an das Sensormesh 6 wird verhindert, dass durch Manipulation der Messung der elektrischen Eigenschaften des Sensormeshs 6 ein gültiges Integritätssignal erzeugt werden kann. Weiters kann vorgesehen sein, dass der Kryptoprozessor 5 für die Validierung mehrere verschiedene elektrische Eigenschaften des Sensormeshs 6 verwendet und bei verschiedenen Durchgängen des Validierungsverfahrens jeweils nur einen Teil dieser elektrischen Eigenschaften verwendet und den verwendeten Teilen zufällig variiert und/oder die Reihenfolge der Messung der einzelnen elektrischen Eigenschaften zufällig variiert. Dadurch wird eine Vortäuschung bestimmter elektrischer Eigenschaften erschwert, weil nicht vorhersehbar ist, welche elektrischen Eigenschaften zu welchem Zeitpunkt gemessen werden.

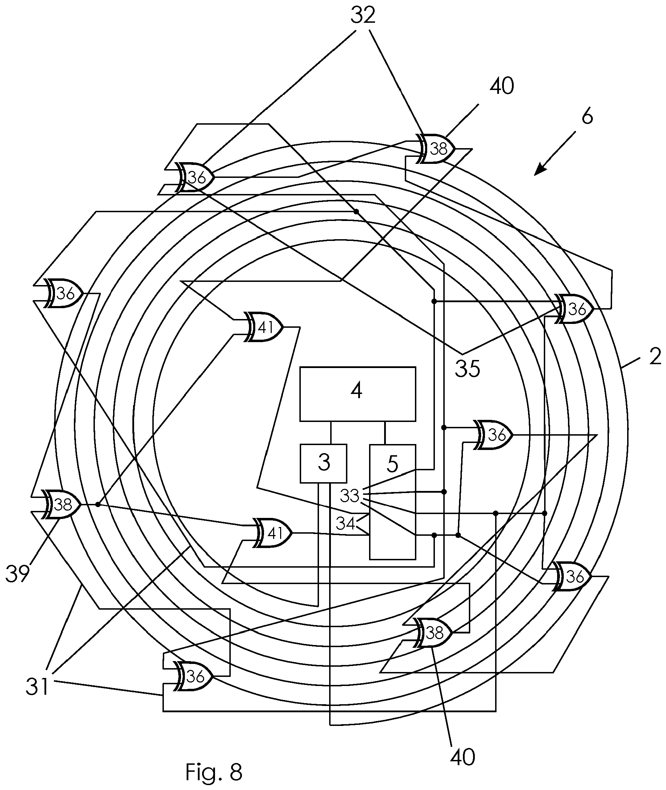

Die in Fig. 8 gezeigte fünfte Ausführungsform entspricht einer elektronischen Markierung 1 mit einem gegenüber der ersten Ausführungsform erweiterten Sensormesh 6 mit einem Netzwerk aus einer Vielzahl von (hier: sechzehn) Sensorleitungen 31. Dabei sind nicht alle Sensorleitungen 31 direkt mit dem Kryptoprozessor 5 verbunden. Vielmehr sind die Sensorleitungen 31 untereinander über elf Logikgatter 32 (hier: XOR-Gates) zu einem Netzwerk oder Baum verbunden. Der Kryptoprozessor 5 weist vier Signalausgänge 33 und zwei Signaleingänge 34 auf. Jeder Signalausgang 33 ist mit Eingängen 35 zweier verschiedener Logikgatter 32 von insgesamt sechs Logikgattern 36 einer ersten Baumebene verbunden. Die Ausgänge 37 dieser Logikgatter 36 sind ihrerseits jeweils mit einem Eingang 35 eines von insgesamt drei Logikgattern 38 einer zweiten Baumebene verbunden. Von diesen drei Logikgattern 38 sind die Ausgänge 37 eines Logikgatters 39 mit zwei Eingängen 35 und die Ausgänge 37 der beiden anderen Logikgatter 40 jeweils mit einem Eingang 35 von insgesamt drei Logikgattern 41 einer dritten Baumebene verbunden. Die Ausgänge 37 dieser beiden Logikgatter 41 sind jeweils mit einem Signaleingang 34 des Kryptoprozessors 5 verbunden.

Zur Messung der elektrischen Eigenschaften des Sensormesh 6 kann der Kryptoprozessor 5 verschiedene Bitkombinationen an den Signalausgängen 33 anlegen. Anhand der dann durch das Netzwerk propagierten und schließlich an den Signaleingängen 34 anliegenden logischen Signale kann der Kryptoprozessor 5 die Unversehrtheit aller Sensorleitungen überprüfen (d. h. eine Beschädigung/Unterbrechung von bereits nur einer Sensorleitung kann erkannt werden, auch wenn nicht notwendigerweise feststellbar ist, welche Sensorleitung 31 beschädigt oder unterbrochen wurde). In einer weiteren Variante können die Logikgatter 32 nicht nur binäre sondern auch quantitative Signale verarbeiten und weitergeben, was eine noch empfindlichere Integritätsprüfung ermöglicht.

Der Fachmann kann die fünf oben beschriebenen Ausführungsformen beliebig kombinieren. Beispielsweise können zwei oder mehr Netzwerke von Sensorleitungen gemäß der fünften Ausführungsform (Fig. 8) in unterschiedlichen Schichten der elektronischen Markierung 1 gemäß der zweiten Ausführungsform (Fig. 2 und 3) vorgesehen und mit dem Kryptoprozessor 5 verbunden sein. Alternativ oder zusätzlich kann ein Netzwerk von Sensorleitungen gemäß der fünften Ausführungsform (Fig. 8) mit einer oder mehreren Sensorleitungen 7, 13 gemäß der ersten oder zweiten Ausführungsform (Fig. 1-3) zu einem Sensormesh 6 kombiniert werden. Schließlich sind die im Zusammenhang mit der dritten und vierten Ausführungsform (Fig. 4 und 5) beschriebenen Varianten zur autonomen Energieversorgung des Kryptoprozessors 5 auch mit der zweiten und fünften Ausführungsform (Fig. 8) kombinierbar.

## Patentansprüche

1. Elektronische Markierung (1) zur Bestätigung der Echtheit eines Gegenstands, umfassend:
eine Antenne (2),
eine analoge Empfangs- und Sendeschaltung (3),
einen Mikrocontroller (4), und
zumindest einen sicheren Kryptoprozessor (5),
wobei die Antenne (2) mit der analogen Empfangs- und Sendeschaltung (3) verbunden ist,
wobei der Mikrocontroller (4) mit der analogen Empfangs- und Sendeschaltung (3) und mit dem zumindest einen sicheren Kryptoprozessor (5) verbunden ist, und
wobei der zumindest eine sichere Kryptoprozessor (5) zur sicheren Erzeugung einer digitalen Signatur eingerichtet ist,
wobei die elektronische Markierung (1) eine oder mehrere elektrische Sensorleitungen (7, 13, 31) aufweist,
wobei der zumindest eine sichere Kryptoprozessor (5) mit mindestens einer der Sensorleitungen (7, 13, 31) verbunden und zur Ermittlung zumindest einer elektrischen Eigenschaft der mindestens einen verbundenen Sensorleitung eingerichtet ist,
**dadurch gekennzeichnet, dass** die eine oder mehreren elektrischen Sensorleitungen (7, 13, 31) von der Antenne (2) verschieden und zumindest teilweise mit der Antenne (2) überlagert angeordnet sind.

2. Elektronische Markierung (1) gemäß Anspruch 1, **dadurch gekennzeichnet, dass** die Antenne (2) eine Spule ist, insbesondere eine gedruckte Spule, wobei die eine oder mehreren elektrischen Sensorleitungen (7, 13, 31) zumindest teilweise in der Spulenfläche der Antenne (2) angeordnet sind.

3. Elektronische Markierung (1) gemäß Anspruch 1 oder 2, **dadurch gekennzeichnet, dass** der zumindest eine sichere Kryptoprozessor (5) zur Ermittlung zumindest des Widerstands, der Kapazität oder der Induktivität der zumindest einen Sensorleitung (7, 13) eingerichtet ist.

4. Elektronische Markierung (1) gemäß einem der vorstehenden Ansprüche, **dadurch gekennzeichnet, dass** die elektronische Markierung (1) zumindest zwei Sensorleitungen (7, 13) aufweist, und dass der zumindest eine sichere Kryptoprozessor (5) zur Ermittlung einer Kopplung zwischen zwei oder mehreren Sensorleitungen (7, 13) eingerichtet ist.

5. Elektronische Markierung (1) gemäß einem der vorstehenden Ansprüche, **dadurch gekennzeichnet, dass** die elektronische Markierung (1) zumindest zwei Sensorleitungen (7, 13) aufweist, und dass die zumindest zwei Sensorleitungen (7, 13) in zumindest zwei Sensorschichten (14, 15), der elektronischen Markierung (1) angeordnet sind.

6. Elektronische Markierung (1) gemäß Anspruch 5, **dadurch gekennzeichnet, dass** die Antenne (2) in einer weiteren, von den zumindest zwei Sensorschichten (14, 15) verschiedenen Antennenschicht (16) angeordnet ist, wobei vorzugsweise auf beiden Seiten der Antennenschicht (16) jeweils zumindest eine Sensorschicht (14, 15) vorgesehen ist.

7. Elektronische Markierung (1) gemäß einem der vorstehenden Ansprüche, **dadurch gekennzeichnet, dass** der zumindest eine sichere Kryptoprozessor (5) zur sicheren Erzeugung einer digitalen Signatur auf Basis eines im Kryptoprozessor (5) gespeicherten digitalen Schlüssels eingerichtet ist.

8. Elektronische Markierung (1) gemäß Anspruch 7, **gekennzeichnet durch** eine elektronische Schaltung, welche zur permanenten Überwachung der einen oder mehreren elektrischen Sensorleitungen (7, 13, 31) und zum Zerstören des digitalen Schlüssels im Fall einer Unterbrechung der elektrischen Versorgung oder im Fall einer Änderung der einen oder mehreren elektrischen Sensorleitungen (7, 13, 31) eingerichtet ist.

9. Elektronische Markierung (1) gemäß einem der vorstehenden Ansprüche, **dadurch gekennzeichnet, dass** die Antenne (2) zur drahtlosen Stromversorgung der elektronischen Markierung (1), insbesondere des Mikrocontrollers (4) eingerichtet ist.

10. Elektronische Markierung (1) gemäß einem der vorstehenden Ansprüche, **gekennzeichnet durch** eine Stromversorgung in Form einer gedruckten Batterie (20), welche zur Stromversorgung zumindest des zumindest einen sicheren Kryptoprozessors (5) eingerichtet ist.

11. Elektronische Markierung (1) gemäß einem der vorstehenden Ansprüche, **gekennzeichnet durch** eine Klebefläche zum Aufkleben der elektronischen Markierung (1) auf ein zu markierendes Objekt.

12. Verfahren zur Initialisierung einer elektronischen Markierung (1) gemäß einem der Ansprüche 1 bis 11 nach dem Aufbringen der elektronischen Markierung (1) auf ein Objekt, umfassend die folgenden Schritte:
Messen zumindest einer elektrischen Eigenschaft der einen oder mehreren elektrischen Sensorleitungen (7, 13, 31);
Speichern der gemessenen elektrischen Eigenschaft in einem geschützten Speicher der elektronischen Markierung (1); und
Deaktivieren eines Schreibzugriffs auf den geschützten Speicher nach dem Speichern.

13. Verfahren zur Validierung einer elektronischen Markierung (1) gemäß einem der Ansprüche 1 bis 11, umfassend die folgenden Schritte:
Messen zumindest einer elektrischen Eigenschaft der einen oder mehreren elektrischen Sensorleitungen (7, 13, 31);
Laden einer in einem geschützten Speicher gespeicherten elektrischen Eigenschaft;
Vergleichen der zumindest einen gemessenen und der zumindest einen geladenen elektrischen Eigenschaft der einen oder mehreren elektrischen Sensorleitungen (7, 13, 31); und
Entwerten der elektronischen Markierung (1), falls zwischen den verglichenen elektrischen Eigenschaften eine Abweichung außerhalb eines vorbestimmten Toleranzbereichs festgestellt wird.

14. Verfahren gemäß Anspruch 13, **dadurch gekennzeichnet, dass** während der Validierung ein zweiter digitaler Schlüssel einer elektronischen Schaltung zur permanenten Überwachung der einen oder mehreren elektrischen Sensorleitungen (7, 13, 31) validiert wird, wobei die elektronische Markierung (1) entwertet wird, wenn die Validierung des zweiten digitalen Schlüssels fehlschlägt.

## Claims

1. An electronic marking (1) for the verification of the authenticity of an object, comprising:
an antenna (2),
an analogue transceiver circuit (3),
a microcontroller (4), and
at least one secure cryptoprocessor (5),
wherein the antenna (2) is connected to the analogue transceiver circuit (3),
wherein the microcontroller (4) is connected to the analogue transceiver circuit (3) and to the at least one secure cryptoprocessor (5), and
wherein the at least one secure cryptoprocessor (5) is configured for securely generating a digital signature,
wherein the electronic marking (1) comprises one or more electrical sensor lines (7, 13, 31),
wherein the at least one secure cryptoprocessor (5) is connected to at least one of the sensor lines (7, 13, 31), and is configured for determining at least one electrical property of the at least one connected sensor line,
**characterised in that** the one or more electrical sensor lines (7, 13, 31) are distinct from the antenna (2), and are arranged at least partly overlapping with the antenna (2).

2. The electronic marking (1) according to claim 1, **characterised in that** the antenna (2) is a coil, in particular a printed coil, wherein the one or more electrical sensor lines (7, 13, 31) are arranged at least partly in the coil area of the antenna (2).

3. The electronic marking (1) according to claim 1 or 2, **characterised in that** the at least one secure cryptoprocessor (5) is configured for determining at least the resistance, the capacitance or the inductance, of the at least one sensor line (7, 13) .

4. The electronic marking (1) according to any one of the preceding claims, **characterised in that** the electronic marking (1) comprises at least two sensor lines (7, 13), and **in that** the at least one secure cryptoprocessor (5) is configured for determining a coupling between two or more sensor lines (7, 13).

5. The electronic marking (1) according to any one of the preceding claims, **characterised in that** the electronic marking (1) comprises at least two sensor lines (7, 13), and **in that** the at least two sensor lines (7, 13) are arranged in at least two sensor layers (14, 15) of the electronic marking (1).

6. The electronic marking (1) according to claim 5, **characterised in that** the antenna (2) is arranged in a further antenna layer (16) that is distinct from the at least two sensor layers (14, 15), wherein preferably at least one sensor layer (14, 15) is provided on each of both sides of the antenna layer (16).

7. The electronic marking (1) according to any one of the preceding claims, **characterised in that** the at least one secure cryptoprocessor (5) is configured for securely generating a digital signature on the basis of a digital key stored in the cryptoprocessor (5).

8. The electronic marking (1) according to claim 7, **characterised by** an electronic circuit arranged for the permanent monitoring of the one or more electrical sensor lines (7, 13, 31) and for the destruction of the digital key in the event of an interruption of the electrical supply, or in the event of an alteration in the one or more electrical sensor lines (7, 13, 31).

9. The electronic marking (1) according to any one of the preceding claims, **characterised in that** the antenna (2) is configured for the wireless power supply of the electronic marking (1), in particular of the microcontroller (4).

10. The electronic marking (1) according to any one of the preceding claims, **characterised by** a power supply in the form of a printed battery (20), which is designed to supply power at least to the at least one secure cryptoprocessor (5).

11. The electronic marking (1) according to any one of the preceding claims, **characterised by** an adhesive surface for the affixing of the electronic marking (1) onto an object to be marked.

12. A method for the initialisation of an electronic marking (1) according to any one of claims 1 to 11, after the application of the electronic marking (1) onto an object, comprising the following steps:
measuring at least one electrical property of the one or more electrical sensor lines (7, 13, 31);
storing the measured electrical property in a protected memory of the electronic marking (1); and
deactivating a write access to the protected memory after the storing.

13. A method for validating an electronic marking (1) according to any one of claims 1 to 11, comprising the following steps:
measuring at least one electrical property of the one or more electrical sensor lines (7, 13, 31);
loading an electrical property stored in a protected memory;
comparing the at least one measured and the at least one loaded electrical property of the one or more electrical sensor lines (7, 13, 31); and
invalidating the electronic marking (1), if a deviation outside a predetermined tolerance range is detected between the compared electrical properties.

14. The method according to claim 13, **characterised in that** in the course of the validation, a second digital key of an electronic circuit for the permanent monitoring of the one or more electrical sensor lines (7, 13, 31) is validated, wherein the electronic marking (1) is invalidated if the validation of the second digital key fails.

## Revendications

1. Marquage électronique (1) pour la confirmation de l'authenticité d'un objet, comprenant :
une antenne (2),
un circuit de réception et d'émission analogique (3),
un microcontrôleur (4), et
au moins un cryptoprocesseur (5) sécurisé,
dans lequel l'antenne (2) est reliée au circuit de réception et d'émission analogique (3),
dans lequel le microcontrôleur (4) est relié au circuit de réception et d'émission analogique (3) et au au moins un cryptoprocesseur (5) sécurisé, et
dans lequel le au moins un cryptoprocesseur (5) sécurisé est conçu pour la production sécurisée d'une signature numérique,
dans lequel le marquage électronique (1) présente une ou plusieurs lignes de capteur (7, 13, 31) électriques,
dans lequel le au moins un cryptoprocesseur (5) sécurisé est relié à la au moins une des lignes de capteur (7, 13, 31) et conçu pour la détermination d'au moins une propriété électrique de la au moins une ligne de capteur reliée,
**caractérisé en ce que** les une ou plusieurs lignes de capteur (7, 13, 31) électriques sont différentes de l'antenne (2) et disposées de manière superposée au moins en partie avec l'antenne (2).

2. Marquage électronique (1) selon la revendication 1, **caractérisé en ce que** l'antenne (2) est une bobine, en particulier une bobine imprimée, dans lequel les une ou plusieurs lignes de capteur (7, 13, 31) électriques sont disposées au moins en partie dans la surface de bobine de l'antenne (2).

3. Marquage électronique (1) selon la revendication 1 ou 2, **caractérisé en ce que** le au moins un cryptoprocesseur (5) sécurisé est conçu pour la détermination au moins de la résistance, de la capacité ou de l'inductance de la au moins une ligne de capteur (7, 13).

4. Marquage électronique (1) selon l'une quelconque des revendications précédentes, **caractérisé en ce que** le marquage électronique (1) présente au moins deux lignes de capteur (7, 13), et que le au moins un cryptoprocesseur (5) sécurisé est conçu pour la détermination d'un couplage entre deux lignes de capteur (7, 13) ou plus.

5. Marquage électronique (1) selon l'une quelconque des revendications précédentes, **caractérisé en ce que** le marquage électronique (1) présente au moins deux lignes de capteur (7, 13), et que les au moins deux lignes de capteur (7, 13) sont disposées dans au moins deux couches de capteur (14, 15) du marquage électronique (1).

6. Marquage électronique (1) selon la revendication 5, **caractérisé en ce que** l'antenne (2) est disposée dans une autre couche d'antenne (16) différente des au moins deux couches de capteur (14, 15), dans lequel de préférence respectivement au moins une couche de capteur (14, 15) est prévue sur les deux faces de la couche d'antenne (16).

7. Marquage électronique (1) selon l'une quelconque des revendications précédentes, **caractérisé en ce que** le au moins un cryptoprocesseur (5) sécurisé est conçu pour la production sécurisée d'une signature numérique sur la base d'une clé numérique mise en mémoire dans le cryptoprocesseur (5).

8. Marquage électronique (1) selon la revendication 7, **caractérisé par** un circuit électronique, lequel est conçu pour la surveillance permanente des une ou plusieurs lignes de capteur (7, 13, 31) électriques et pour la destruction de la clé numérique dans le cas d'une interruption de l'alimentation électrique ou dans le cas d'une modification des une ou plusieurs lignes de capteur (7, 13, 31) électriques.

9. Marquage électronique (1) selon l'une quelconque des revendications précédentes, **caractérisé en ce que** l'antenne (2) est conçue pour l'alimentation en courant sans fil du marquage électronique (1), en particulier du microcontrôleur (4).

10. Marquage électronique (1) selon l'une quelconque des revendications précédentes, **caractérisé par** une alimentation en courant sous forme d'une batterie (20) imprimée, laquelle est conçue pour l'alimentation en courant au moins du au moins un cryptoprocesseur (5) sécurisé.

11. Marquage électronique (1) selon l'une quelconque des revendications précédentes, **caractérisé par** une surface adhésive pour le collage du marquage électronique (1) sur un objet à marquer.

12. Procédé pour l'initialisation d'un marquage électronique (1) selon l'une quelconque des revendications 1 à 11 après l'application du marquage électronique (1) sur un objet, comprenant les étapes suivantes :
la mesure d'au moins une propriété électrique des une ou plusieurs lignes de capteur (7, 13, 31) électriques ;
la mise en mémoire de la propriété électrique mesurée dans une mémoire protégée du marquage électronique (1) ; et
la désactivation d'un accès en écriture sur la mémoire protégée après la mise en mémoire.

13. Procédé pour la validation d'un marquage électronique (1) selon l'une quelconque des revendications 1 à 11, comprenant les étapes suivantes :
la mesure d'au moins une propriété électrique des une ou plusieurs lignes de capteur (7, 13, 31) électriques ;
le chargement d'une propriété électrique mise en mémoire dans une mémoire protégée ;
la comparaison de la au moins une propriété électrique mesurée et de la au moins une chargée des une ou plusieurs lignes de capteur (7, 13, 31) électriques ; et
l'invalidation du marquage électronique (1), au cas où un écart à l'extérieur d'une plage de tolérances prédéfinie serait constaté entre les propriétés électriques comparées.

14. Procédé selon la revendication 13, **caractérisé en ce que** pendant la validation une deuxième clé numérique d'un circuit électronique pour la surveillance permanente des une ou plusieurs lignes de capteur (7, 13, 31) électriques est validée, dans lequel le marquage électronique (1) est invalidé lorsque la validation de la deuxième clé numérique échoue.
